# EUROPEAN PATENT SPECIFICATION

(11) **EP 3 972 121 B1**
(45) Date of publication and mention of the grant of the patent: **01.11.2023**
(21) Application number: 20306054.6
(22) Date of filing: 18.09.2020
(51) Int. Cl.: H02P 23/00

(54) **METHODS AND DEVICES FOR MITIGATING COMMON MODE CURRENTS IN AC POWER SYSTEMS**
VERFAHREN UND VORRICHTUNGEN ZUR REDUZIERUNG VON GLEICHTAKTSTRÖMEN IN WECHSELSTROMNETZEN
PROCÉDÉS ET DISPOSITIFS POUR ATTÉNUER DES COURANTS EN MODE COMMUN DANS DES SYSTÈMES D'ALIMENTATION CA

(43) Date of publication of application: 23.03.2022
(73) Proprietor: Schneider Toshiba Inverter Europe SAS, 27120 Pacy-sur-Eure (FR)
(72) Inventor: MESSAOUDI, Mehdi, 38050 GRENOBLE Cedex 09 (FR); ALLAERT, Yves-Laurent, 38050 GRENOBLE Cedex 09 (FR)
(74) Representative: Lavoix

(56) References cited:
- EP-A1- 2 833 534
- EP-A2- 2 495 863
- US-A1- 2011 141 774

## Description

### TECHNICAL FIELD

Aspects of the invention more generally relate to methods and devices for mitigating common mode currents in alternating current (AC) power systems.

### BACKGROUND

Power factor compensation devices are frequently used for correcting the power factor of AC power systems.

For example, an AC power system may comprise an electric motor controlled by a variable speed drive powered by a mains power grid through a cable carrying a threephase electric current. A power factor compensation device is configured to provide variable reactive power by selectively connecting or disconnecting one or more capacitors to each electrical phase of the system.

Common mode noise is a typical issue in such systems. For example, during operation, a stray capacitive coupling may appear between the cable and the ground, resulting in a common mode electric current flowing back from the variable speed drive to the power grid through the ground. To avoid electromagnetic compatibility issues, it is desirable to suppress or at least mitigate such common mode currents.

There is therefore a need for improved methods and devices for mitigating common mode currents in AC power systems.

### SUMMARY

According to an aspect, a method for mitigating common mode currents in an alternating current (AC) electrical power system comprising an electric motor controlled by a variable speed drive powered connected to an electrical power source through electrical conductors, wherein said method comprises:
measuring electrical currents in electrical conductors connecting the electrical power source to the variable speed drive;
identifying common mode current values based on the measured electrical currents, by a control unit comprising electronic control circuitry;
operating the power factor compensation device so as to cancel common mode currents between the electric motor and the electrical source, based on the identified common mode current values.

According to some further aspects, the invention may comprise one or more of the following features, considered alone or according to all possible combinations:
Identifying common mode current values comprises computing a statistical value representative of the measured currents, such as a RMS value, said statistical value being representative of the common mode current.

Identifying common mode current values comprises analyzing a frequency-domain signal representative of the harmonic values of the measured electrical currents.

Identifying common mode current values further comprises comparing the harmonic values to a predefined threshold and wherein only the harmonic values higher than the predefined threshold are deemed relevant for compensating the common mode currents.

Identifying common mode current values comprises calculating a statistical value, such as the average, of several frequency-domain signals representative of the harmonic values of the measured electrical currents.

Measuring electrical currents in electrical conductors is performed using a first current measurement device, a second current measurement device and a third current measurement device, wherein the first measurement device is configured to measure a first electrical current flowing on said electrical conductors from the power source, wherein the second measurement device is configured to measure a second electrical current flowing on said electrical conductors towards the variable speed drive, and wherein the third measurement device is configured to measure a third electrical current flowing between said electrical conductors and the power factor compensation device.

Operating the power factor compensation device comprises synchronizing operation of the power factor compensation device may be synchronized with a control signal, such a pulsed width modulation control signal, used for driving the variable speed drive.

According to another aspect, an alternating current power system, comprises an electric motor controlled by a variable speed drive connected to an electrical power source through electrical conductors, a power factor compensation device connected between said electrical conductors and a ground bus, and a control unit comprising electronic control circuitry configured to implement a method comprising:
measuring electrical currents in electrical conductors connecting the electrical power source to the variable speed drive;
identifying common mode current values based on the measured electrical currents;
operating the power factor compensation device so as to cancel common mode currents between the electric motor and the electrical source, based on the identified common mode current values.

According to yet another aspect, a capacitor may be connected between an output of the power factor compensation device and the ground bus.

### BRIEF DESCRIPTION OF THE DRAWINGS

The invention will be better understood upon reading the following description, provided solely as an example, and made in reference to the appended drawings, in which:
FIG. 1 is a simplified diagram illustrating an AC power system including a power factor compensation device according to some embodiments of the invention;
FIG. 2 is a block diagram illustrating a control system of the power factor compensation device of FIG. 1 according to some embodiments of the invention;
FIG. 3 is a flow diagram of an exemplary method for operation of the control system of FIG. 2 according to some embodiments of the invention;
FIG.4 and FIG. 5 are simplified block diagrams illustrating two additional embodiments.

### DETAILED DESCRIPTION OF SOME EMBODIMENTS

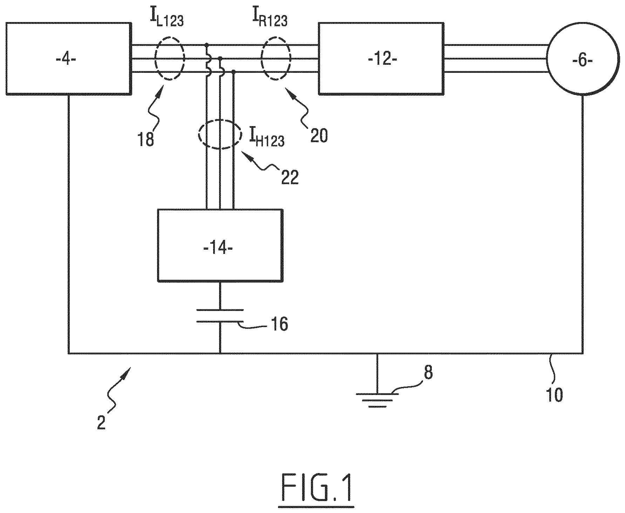

Figure 1 shows an alternating current (AC) power system 2, connected to an AC electrical power source 4 and an electrical load 6.

In some embodiments, supply power is delivered to the power system 2 by the power source 4 through a connection to a power grid, or "mains" grid, delivering an electric AC current, such as a three phase electric current.

In some other embodiments, the power source 4 may include a generator.

In the illustrated non-limiting example, the load 6 is an electric AC motor 6.

The power source 4 is configured to supply an electric AC current to the motor 6 through one or more electrical conductors ("mains bus"), such as one or more cables.

The motor 6 and the power source 4 are connected to an electric ground 8 through one or more conductors, such as a ground rail 10.

The power system 2 further comprises a variable speed drive 12 connected to said one or more conductors between the power source 4 and the motor 6.

The variable speed drive 12 is configured to deliver suitable supply currents and voltages to the motor 6 when powered by the AC currents supplied by the power source 4.

Variable speed drives are well known and are not described in further detail herein.

The power system 2 further comprises a power factor compensation (PFC) device 14 configured to compensate the power factor of the system 2.

For example, the PFC device 14 is configured to reduce the total reactive power in the system 2 during operation in order to keep the power factor close or equal to 1.

For example, the PFC device 14 is connected to each phase of the conductors between the power source 4 and the variable speed drive 12.

In some embodiments, the PFC device 14 comprises a plurality of capacitors, a plurality of switches and an internal direct current (DC) bus.

For each electrical phase of the electrical system 2, an input terminal is connected to a switch and to one or more capacitors. Each input terminal is connected to a corresponding electrical conductor between the power source 4 and the variable speed drive 12. The capacitors are connected to the DC bus.

A control unit including electronic circuitry (not illustrated on Figure 1) is configured to automatically open or close the switches of the PFC device 14 to selectively connect or disconnect one or more capacitors from the one or more conductors in response to power factor variations during operation.

The control unit is further configured to control operation of the variable speed drive 12, for example to drive the motor 8 according to one or more desired operational parameters, such as speed, or torque, or voltage. For example, the control unit is configured to control the motor 8 using a pulse width modulation (PWM) method.

The electronic control circuitry of the control unit may include a processor (such as a microcontroller) and a memory (e.g., a computer-readable non-transitory storage medium) in which executable instructions and/or software code and/or control algorithms are stored and which, when executed by the processor, cause the PCF device 14 and/or the variable speed drive 12 to operate according to one or more of the methods described below.

The memory may include a random access memory (RAM) and/or other forms of memory such as flash memory, electronically erasable programmable read-only memory (EEPROM), or any equivalent thereof.

In other embodiments, the electronic control circuit may include equivalent elements such as microcomputers, programmable logic controllers, application specific integrated circuits (ASIC) or reprogrammable logic circuits, such as field programmable gate arrays (FPGA) circuits, or any other circuit capable of executing the functions described herein.

Preferably, a capacitor 16 is connected between the internal DC bus of the PFC device 14 and the ground bus 10, for example so as to allow an electrical current to return to the ground bus 10 from the PFC device 14.

The system 2 further comprises a first current measurement device 18, a second current measurement device 20 and a third current measurement device 22.

The first measurement device 18 is configured to measure a first AC current I_{L123} flowing on the main conductors from the power source 4, ahead of the connection with the PFC device 14.

The second measurement device 20 is configured to measure a second AC current I_{R123} flowing on the main conductors towards the variable speed drive 12, downstream the connection with the PFC device 14.

The third measurement device 22 is configured to measure a third AC current I_{H123} flowing between the main conductors and the PFC device 14.

In some embodiments, each current measurement device 18, 20, 22 may include a current sensor coupled to the main bus, preferably coupled to each phase conductor of the main bus. The current sensor may be a Rogowski coil, or a current shunt, or any suitable AC current sensor.

For example, the first current measurement device 18, the second current measurement device 20 and the third current measurement device 22 are coupled to the control unit. Said control unit is configured to operate the PFC device 14 at least based on outputs from one or more of said current measurement devices.

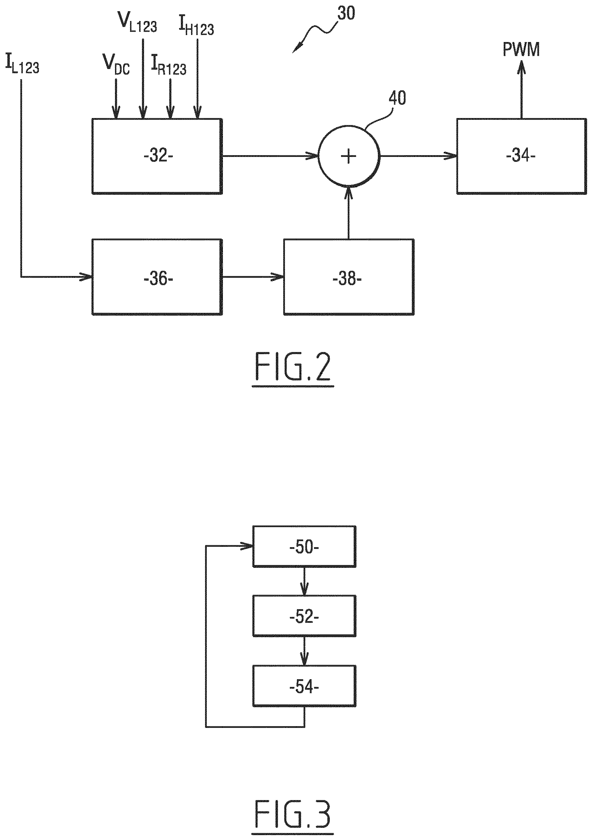

More generally, as illustrated by Figure 3, the control device is configured to mitigate a common mode current in the system 2 by implementing a method comprising:
- measuring electrical currents in electrical conductors connecting the electrical source 4 to the variable speed drive 12 (block 50), using at least some of the current measuring devices 18, 20 and 22;
- identifying common mode current values based on the measured electrical currents (block 52);
- operating the PFC device 14 so as to cancel common mode currents between the motor 8 and the electrical source 4, based on the identified common mode current values (block 54).

In reference to Figure 2, there is illustrated an exemplary control system 30 implemented by the control unit for operating the system 2 in accordance with some embodiments.

A common drawback of traditional PFC devices is that they are usually able to compensate only low frequency common mode currents.

Therefore, in accordance with embodiments of the invention, the system 30 is further configured to perform an additional compensation in order to compensate higher frequency common mode currents, as described below.

For example, "high frequencies" are frequencies equal to or higher than 100kHz or 150 kHz.

At block 32, the system 30 receives as input the measured currents I_{R123} and I_{H123}, as well as measured voltage V_{L123} (defined as the sum of voltages for each of the three phases) and measured voltage V_{DC}, and controls the PFC device 14 in a known fashion, based on this input, to compensate low frequency common mode currents.

At block 36, the system 30 receives as input the measured current I_{L123}, and automatically identifies common mode current values from said measured current. For example, a statistical value representative of said common mode current (such as a RMS value of the measured current) is automatically computed.

At block 38, the system 30 automatically computes a control strategy for driving the PFC device.

In some embodiments, operation of the PFC device 14 may be synchronized with the PWM control signal (block 34) used to control the variable speed drive 12 in order to minimize the common mode current on the mains bus.

For example, the switches of the PFC device 14 are automatically opened and closed so as to be synchronized with the evolution of the PWM signal. In some embodiments, the PWM signal may be modified so as to be synchronized with the PFC device 14.

According to an example, the synchronization may be performed according to the method described in document EP 2 833 534 A1.

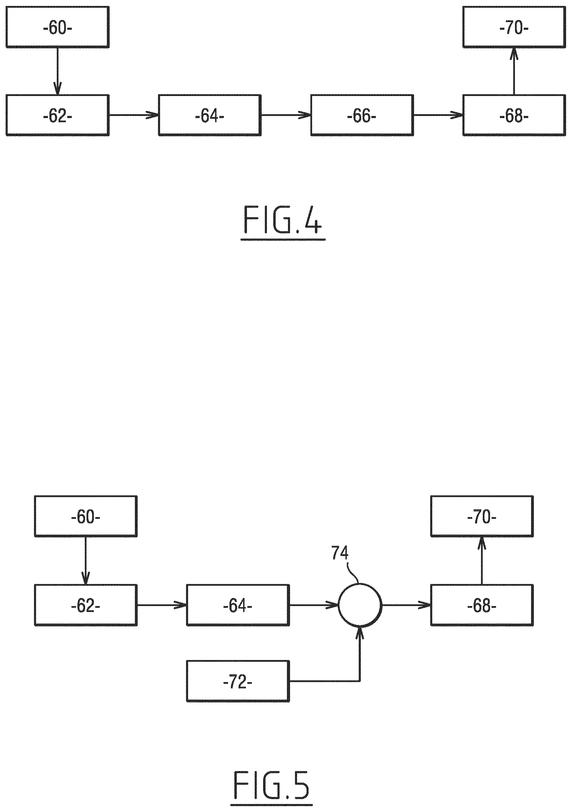

In reference to Figure 4, there is illustrated an exemplary control system similar to control system 30 implemented by the control unit for operating the system 2 in accordance with some other embodiments, based on a detection of the quasi peak value of the high-frequency component of the electrical current flowing on the mains bus.

At block 60, the system measures the common mode currents on the mains bus, for example using the current measurement devices 16, 18 and 20, for example as described above in reference to block 32.

At block 62, a high-pass filter is applied in order to eliminate the low frequency components of the measured current signals.

At block 64, a frequency analysis is performed, for example by applying a Fourier transform to the filtered current signals. According to some embodiments, the Fourier transform may be applied digitally, using a Fast Fourier Transform (FFT) method.

The steps applied at blocks 60, 62 and 64 may be repeated over time, for example repeated periodically.

At block 66, the result of one or more frequency analyses (output of block 64) is compared in order to select a frequency profile for determining a compensation signal, and thus to identify common mode current values to be compensated.

For example, said comparison may include calculating a statistical value (e.g., calculating the average) of the results of several frequency analyses.

For example, the selected frequency profile is a frequency-domain signal representative of one or more frequency values (harmonics values) deemed the most relevant for performing the power factor compensation.

At block 68, a reverse frequency analysis is performed, for example by applying an inverse Fourier transform to the selected frequency profile, in order to determine a compensation strategy (e.g., to output a current signal waveform in the time domain).

At block 70, the PFC device 14 is operated so as to compensate the common mode current according to the compensation strategy determined on the basis of the selected frequency profile, e.g. by synchronizing operation of the PFC device 14 with operation of the variable speed drive 12 (e.g., as described in reference to block 34).

In reference to Figure 5, there is illustrated yet another exemplary control system, similar to control system 30, implemented by the control unit for operating the system 2 in accordance with some other embodiments, based on amplitude values of the high-frequency component of the electrical current flowing on the mains bus.

This control system is similar to the control system described at Figure 4, and includes blocks 60, 62, 64, 68 and 70 as described above.

At blocks 60, 62 and 64, the control system operates as previously described.

However in addition, the control system further comprises a block 72 in which a predefined frequency threshold value is acquired. For example, said predefined value may be provided by a user of the system.

At block 74, the control system compares the outputs of blocks 64 and 72, i.e. automatically compares the calculated frequency profile (e.g., the frequency-domain signal resulting from the Fourier transform applied during the frequency analysis) with the acquired predefined frequency threshold, in order to select a frequency profile for determining a compensation signal, and thus to identify common mode current values to be compensated.

For example, only the frequency components (harmonics) higher than the predefined threshold are selected. In other words, only the frequencies higher than the frequency threshold will then be compensated.

At block 68, a reverse frequency analysis is performed, for example by applying an inverse Fourier transform to the selected frequency profile, in order to determine a compensation strategy.

At block 70, the PFC device 14 is operated so as to compensate the common mode current according to the compensation strategy determined on the basis of the selected frequency profile, for example by synchronizing operation of the PFC device 14 with operation of the variable speed drive 12 (e.g., as described in reference to block 34).

In some other embodiments, the control strategies implemented by the control systems of Figures 4 and 5 could be combined.

For example, the methods implemented by blocks 72 and 74 can be added to the control system of Figure 4, so that a comparison of the selected frequency profile (output of block 66) with the acquired predefined frequency threshold can be performed, in order to select a frequency profile for determining a compensation signal.

Then, at block 68, a reverse frequency analysis is performed, and at block 70, the PFC device 14 is operated so as to compensate the common mode current according to the compensation strategy determined on the basis of the selected frequency profile.

Owing to the multiple embodiments described above, unwanted common mode currents and voltages can be effectively reduced, especially at high frequencies, without having to add extra equipment such as electromagnetic compatibility filters (EMC filters), which are costly and add unwanted complexity.

In addition, existing systems can be easily retrofitted simply by suitably programming the control system to drive the PFC device 14.

## Claims

1. A method for mitigating common mode currents in an alternating current (AC) electrical power system (2) comprising an electric motor (6) controlled by a variable speed drive (12) connected to an electrical power source (4) through electrical conductors, **characterised by** a power factor compensation device (14) connected between said electrical conductors and a ground bus (10), wherein said method comprises:
measuring (50) electrical currents in electrical conductors connecting the electrical power source to the variable speed drive;
identifying (52) common mode current values based on the measured electrical currents, by a control unit comprising electronic control circuitry;
operating (54) the power factor compensation device so as to cancel common mode currents between the electric motor and the electrical source, based on the identified common mode current values.

2. The method of claim 1, wherein identifying common mode current values comprises computing a statistical value representative of the measured currents, such as a RMS value, said statistical value being representative of the common mode current.

3. The method of claim 1, wherein identifying common mode current values comprises analyzing a frequency-domain signal representative of the harmonic values of the measured electrical currents.

4. The method of claim 3, wherein identifying common mode current values further comprises comparing the harmonic values to a predefined threshold and wherein only the harmonic values higher than the predefined threshold are deemed relevant for compensating the common mode currents.

5. The method of claim 3 or claim 4, wherein identifying common mode current values comprises calculating a statistical value, such as the average, of several frequency-domain signals representative of the harmonic values of the measured electrical currents.

6. The method according to any one of the previous claims, wherein measuring electrical currents in electrical conductors is performed using a first current measurement device (18), a second current measurement device (20) and a third current measurement device (22), wherein the first measurement device (18) is configured to measure a first electrical current (I_{L123}) flowing on said electrical conductors from the power source (4), wherein the second measurement device (20) is configured to measure a second electrical current (I_{R123}) flowing on said electrical conductors towards the variable speed drive (12), and wherein the third measurement device (22) is configured to measure a third electrical current (I_{H123}) flowing between said electrical conductors and the power factor compensation device (14).

7. The method according to any one of the previous claims, wherein operating the power factor compensation device comprises synchronizing operation of the power factor compensation device (14) may be synchronized with a control signal, such a pulsed width modulation control signal, used for driving the variable speed drive (12).

8. An alternating current (AC) power system (2), comprising an electric motor (6) controlled by a variable speed drive (12) connected to an electrical power source (4) through electrical conductors, **characterised by** a power factor compensation device (14) connected between said electrical conductors and a ground bus (10), and a control unit (30) comprising electronic control circuitry configured to implement a method comprising:
measuring electrical currents in electrical conductors connecting the electrical power source to the variable speed drive;
identifying common mode current values based on the measured electrical currents,;
operating the power factor compensation device so as to cancel common mode currents between the electric motor and the electrical source, based on the identified common mode current values.

9. The power system of claim 8, wherein a capacitor (16) is connected between an output of the power factor compensation device (14) and the ground bus (10).

## Patentansprüche

1. Verfahren zur Abschwächung von Gleichtaktströmen in einem elektrischen Wechselstromsystem (AC) (2), das einen Elektromotor (6) umfasst, der von einem Antrieb (12) mit variabler Geschwindigkeit gesteuert wird, der über elektrische Leiter mit einer elektrischen Stromquelle (4) verbunden ist, **gekennzeichnet durch** eine Leistungsfaktor-Kompensationsvorrichtung (14), die zwischen den elektrischen Leitern und einer Erdungssammelschiene (10) angeschlossen ist, wobei das Verfahren Folgendes umfasst:
Messen (50) der elektrischen Ströme in den elektrischen Leitern, die die elektrische Stromquelle mit dem Antrieb mit variabler Geschwindigkeit verbinden;
Identifizieren (52) von Gleichtaktstromwerten auf der Grundlage der gemessenen elektrischen Ströme durch eine Steuereinheit mit einer elektronischen Steuerschaltung;
Betreiben (54) der Leistungsfaktor-Kompensationsvorrichtung, um die Gleichtaktströme zwischen dem Elektromotor und der Stromquelle auf der Grundlage der identifizierten Gleichtaktstromwerte zu eliminieren.

2. Verfahren nach Anspruch 1, wobei das Identifizieren von Gleichtaktstromwerten das Berechnen eines statistischen Werts umfasst, der für die gemessenen Ströme repräsentativ ist, wie z. B. ein RMS-Wert, wobei der statistische Wert für den Gleichtaktstrom repräsentativ ist.

3. Verfahren nach Anspruch 1, wobei das Identifizieren von Gleichtaktstromwerten das Analysieren eines Frequenzbereichssignals umfasst, das für die Oberschwingungswerte der gemessenen elektrischen Ströme repräsentativ ist.

4. Verfahren nach Anspruch 3, wobei das Identifizieren von Gleichtaktstromwerten ferner das Vergleichen der Oberschwingungswerte mit einem vordefinierten Schwellenwert umfasst, und wobei nur die Oberschwingungswerte, die über dem vordefinierten Schwellenwert liegen, als relevant für die Kompensation der Gleichtaktströme angesehen werden.

5. Verfahren nach Anspruch 3 oder Anspruch 4, wobei das Identifizieren von Gleichtaktstromwerten das Berechnen eines statistischen Werts, wie z. B. des Mittelwerts, mehrerer Frequenzbereichssignale umfasst, die für die Oberschwingungswerte der gemessenen elektrischen Ströme repräsentativ sind.

6. Verfahren nach einem der vorhergehenden Ansprüche, wobei das Messen elektrischer Ströme in elektrischen Leitern unter Verwendung einer ersten Strommessvorrichtung (18), einer zweiten Strommessvorrichtung (20) und einer dritten Strommessvorrichtung (22) durchgeführt wird, wobei die erste Messvorrichtung (18) so konfiguriert ist, dass sie einen ersten elektrischen Strom (I_{L123}) misst, der auf den elektrischen Leitern von der Stromquelle (4) fließt, wobei die zweite Messvorrichtung (20) so konfiguriert ist, dass sie einen zweiten elektrischen Strom (I_{R123}) misst, der auf den elektrischen Leitern in Richtung des Antriebs (12) mit variabler Geschwindigkeit fließt, und wobei die dritte Messvorrichtung (22) so konfiguriert ist, dass sie einen dritten elektrischen Strom (I_{H123}) misst, der zwischen den elektrischen Leitern und der Leistungsfaktor-Kompensationsvorrichtung (14) fließt.

7. Verfahren nach einem der vorhergehenden Ansprüche, bei dem der Betrieb der Leistungsfaktor-Kompensationsvorrichtung die Synchronisierung des Betriebs der Leistungsfaktor-Kompensationsvorrichtung (14) mit einem Steuersignal, wie z. B. einem Impulsbreitenmodulations-Steuersignal, das für den Antrieb des Antriebs (12) mit variabler Geschwindigkeit verwendet wird, umfasst.

8. Wechselstromsystem (AC) (2) mit einem Elektromotor (6), der von einem Antrieb (12) mit variabler Geschwindigkeit gesteuert wird, der über elektrische Leiter mit einer elektrischen Stromquelle (4) verbunden ist, **gekennzeichnet durch** eine Leistungsfaktor-Kompensationsvorrichtung (14), die zwischen den elektrischen Leitern und einer Erdungssammelschiene (10) angeschlossen ist, und eine Steuereinheit (30), die eine elektronische Steuerschaltung umfasst, die so konfiguriert ist, dass sie ein Verfahren implementiert, das Folgendes umfasst:
Messen der elektrischen Ströme in den elektrischen Leitern, die die elektrische Stromquelle mit dem Antrieb mit variabler Geschwindigkeit verbinden;
Identifizieren von Gleichtaktstromwerten auf der Grundlage der gemessenen elektrischen Ströme;
Betreiben der Leistungsfaktor-Kompensationsvorrichtung, um die Gleichtaktströme zwischen dem Elektromotor und der Stromquelle auf der Grundlage der identifizierten Gleichtaktstromwerte zu eliminieren.

9. Stromversorgungssystem nach Anspruch 8, wobei ein Kondensator (16) zwischen einem Ausgang der Leistungsfaktor-Kompensationsvorrichtung (14) und der Erdungssammelschiene (10) angeschlossen ist.

## Revendications

1. Procédé d'atténuation des courants de mode commun dans un système d'alimentation électrique à courant alternatif (CA) (2) comprenant un moteur électrique (6) commandé par un variateur de vitesse (12) connecté à une source d'alimentation électrique (4) par des conducteurs électriques, **caractérisé par** un dispositif de compensation du facteur de puissance (14) connecté entre lesdits conducteurs électriques et un bus de terre (10), dans lequel ledit procédé comprend :
mesurer (50) les courants électriques dans les conducteurs électriques reliant la source d'énergie électrique au variateur de vitesse ;
identifier (52) les valeurs de courant de mode commun sur la base des courants électriques mesurés, par une unité de commande comprenant un circuit de commande électronique ;
faire fonctionner (54) le dispositif de compensation du facteur de puissance de manière à annuler les courants de mode commun entre le moteur électrique et la source électrique, sur la base des valeurs de courant de mode commun identifiées.

2. Procédé selon la revendication 1, dans lequel l'identification des valeurs de courant de mode commun comprend le calcul d'une valeur statistique représentative des courants mesurés, telle qu'une valeur efficace, cette valeur statistique étant représentative du courant de mode commun.

3. Procédé selon la revendication 1, dans lequel l'identification des valeurs de courant de mode commun comprend l'analyse d'un signal dans le domaine des fréquences représentatif des valeurs des harmoniques des courants électriques mesurés.

4. Procédé selon la revendication 3, dans lequel l'identification des valeurs de courant de mode commun comprend en outre la comparaison des valeurs des harmoniques à un seuil prédéfini et dans lequel seules les valeurs des harmoniques supérieures au seuil prédéfini sont jugées pertinentes pour la compensation des courants de mode commun.

5. Procédé selon la revendication 3 ou la revendication 4, dans lequel l'identification des valeurs de courant de mode commun comprend le calcul d'une valeur statistique, telle que la moyenne de plusieurs signaux du domaine de la fréquence représentatifs des valeurs des harmoniques des courants électriques mesurés.

6. Procédé selon l'une quelconque des revendications précédentes, dans lequel la mesure des courants électriques dans les conducteurs électriques est effectuée à l'aide d'un premier dispositif de mesure de courant (18), d'un deuxième dispositif de mesure de courant (20) et d'un troisième dispositif de mesure de courant (22), dans lequel le premier dispositif de mesure (18) est configuré pour mesurer un premier courant électrique (I_{L123}) circulant sur lesdits conducteurs électriques à partir de la source d'alimentation (4), le deuxième dispositif de mesure (20) est configuré pour mesurer un deuxième courant électrique (I_{R123}) circulant sur lesdits conducteurs électriques en direction du variateur de vitesse (12), et le troisième dispositif de mesure (22) est configuré pour mesurer un troisième courant électrique (I_{H123}) circulant entre lesdits conducteurs électriques et le dispositif de compensation du facteur de puissance (14).

7. Procédé selon l'une quelconque des revendications précédentes, dans lequel le fonctionnement du dispositif de compensation du facteur de puissance comprend la synchronisation du fonctionnement du dispositif de compensation du facteur de puissance (14) qui peut être synchronisé avec un signal de commande, tel qu'un signal de commande de modulation de largeur d'impulsion, utilisé pour entraîner le variateur de vitesse (12).

8. Système d'alimentation en courant alternatif (CA) (2), comprenant un moteur électrique (6) commandé par un variateur de vitesse (12) connecté à une source d'énergie électrique (4) par des conducteurs électriques, **caractérisé par** un dispositif de compensation du facteur de puissance (14) connecté entre lesdits conducteurs électriques et un bus de terre (10), et une unité de commande (30) comprenant un circuit de commande électronique configuré pour mettre en oeuvre un procédé comprenant :
mesurer les courants électriques dans les conducteurs électriques reliant la source d'énergie électrique au variateur de vitesse ;
identifier les valeurs de courant de mode commun sur la base des courants électriques mesurés ;
faire fonctionner le dispositif de compensation du facteur de puissance de manière à annuler les courants de mode commun entre le moteur électrique et la source électrique, sur la base des valeurs de courant de mode commun identifiées.

9. Système électrique selon la revendication 8, dans lequel un condensateur (16) est connecté entre une sortie du dispositif de compensation du facteur de puissance (14) et le bus de terre (10).
